# EUROPEAN PATENT SPECIFICATION

(11) **EP 1 622 043 B1**
(45) Date of publication and mention of the grant of the patent: **04.07.2012**
(21) Application number: 05076662.5
(22) Date of filing: 19.07.2005
(51) Int. Cl.: G06F 17/30

(54) **Computer method for browsing and web-browser program**
Verfahren und Programm zur Web-Navigation
Procédé et logiciel pour navigation sur internet

(30) Priority: 19.07.2004 EP 04016966
(43) Date of publication of application: 01.02.2006
(73) Proprietor: SAP AG, 69190 Walldorf (DE)
(72) Inventor: Wood, Eric, Menlo Park, CA 94025 (US)
(74) Representative: Müller-Boré & Partner Patentanwälte

(56) References cited:
- WO-A-00/25239
- WO-A-01/57718
- US-A1- 2002 112 082
- US-B1- 6 456 305

## Description

The invention relates to a method for browsing. The invention also relates to a computer program product, and to an article of manufacture with a computer usable medium having computer readable instructions embodied therein.

The use of electronic media to convey information among networked users has become vital in many applications. One way of conveying such information is through the Internet. The Internet is a distributed network of computers that provides a worldwide information resource to users.

Users can access the Internet using standard computer equipment, such as a personal computer with a display and modem connected to the Internet. Several types of Internet connections are available, including connections through Internet Service Providers (ISPs). To use an Internet connection from an ISP, for example, a user can electronically connect his personal computer to a server at the ISP's facility using the modem and a standard telephone line or a local area network (LAN) connection. The ISP's server in turn provides the user with access to the Internet.

A part of the Internet is the so-called world wide web (www), from hereon referred to as the web. The web includes a collection of hypertext documents, from hereon referred to as web-pages, stored on Internet servers. Web-pages can be linked together via hyperlinks.

Information contained in a web-page is commonly referred to as "content". Typically, web-pages are programmed using a computer language such as hypertext markup language (HTML). HTML files (or ".htm" files) are stored on a server ("web-server") and define the content and layout of web-pages.

Typically, a user accesses information on the web using a computer program, hereafter referred to as a "web-browser program". A web-browser program provides an interface to the web. Examples of web-browser programs include Netscape Navigator™ from Netscape Communications Corporation or Internet Explorer™ from Microsoft Corporation. To view information in a web-page, the user uses the web-page's Uniform Resource Locator (URL) address to instruct the web-browser program to access the web-page. The web-browser program retrieves the information and visually displays it to the user.

Communication between the user's web-browser program and a web-server is typically based on a request/response paradigm involving the Hypertext Transfer Protocol (HTTP). When, for example an HTTP request is made by the web-browser program to view a web-page, the web-server provides a response to permit the web-page to be displayed by the web-browser program.

A computer system on which a web-browser program can be run is known in the art. The computer system has an operating system which services the sequencing and processing of computer programs run on it, such as the web-browser program. The computer system has a graphical user interface (GUI) at which a graphical representation of one or more programs running on the computer system can be outputted. In the GUI, a representation of the web-browser program can be outputted visually to a user. The graphical representation of the web-browser program is from hereon referred to as the "web-browser window".

The web-browser window is provided by the operating system with graphical controls by means of which the web-browser window can be set to a "maximized" state, a "minimized" state or an intermediate state. In the "maximized" state, the web-browser window occupies a maximum amount of space of the GUI. Typically the maximum amount of space consists of the entire space of the GUI minus space occupied by user interface elements of the operating system itself. In the "minimized" state, the web-browser window itself occupies no space in the GUI. However, in the "minimized" state a control element of the operating system is present in the GUI by means of which the web-browser window can be returned to the state preceding the "minimized" state. In the intermediate state, the web-browser window is provided by the operating system with a size-control by means of which the user of the computer system can instruct the operating system to set the dimensions of the web-browser window to any arbitrary size above a threshold size and below the size of the web-browser window in the "maximized" state.

In a web-browser window one or more web-information areas are normally present. In the web-information areas, information from the web is displayed. In case the display-size of such information exceeds the available space of a web-information area, the web-browser program automatically provides scroll-bars to the web-information area. By means of such a scroll-bar, the user can displace the displayed information relative to the web-information area. Due to the displacement, part of the displayed information will be "moved out of' the web-information area, i.e. will be removed from the GUI. Thereby, "free space" becomes available in the web-information area. Information "outside" the web-information area, which has been hidden, can then be displayed in the web-information area.

It is generally recognised that accessing the contents of web-information areas by operating such scroll-bars reduces the accessibility of the web-browser window, since the operating of scroll-bars forms an extra step in accessing the contents. Besides, the presence of scroll-bars often results in a confusing and inelegant web-browser window, particularly when a single web-browser window comprises a lot of web-information areas provided with scroll-bars. Also, the scroll-bars themselves take up space of the web-browser window, which space is not available anymore for displaying other information. Furthermore, for some known systems, scroll-bars are sometimes rendered in cases when the display size of information does not exceed the available space of a web-information area. These, non-movable, scroll-bars are in fact superfluous.

In order to improve the accessibility of web-browser windows, known systems apply different solutions to prevent the generation of scroll-bars. Some of these solutions are based on the use of web-browser frames. Other solutions comprise the detecting of the current size of a web-browser window, followed by the re-rendering of the web-information areas based on the detected size.

However, a disadvantage of these known solutions for improving the accessibility of web-browser windows is that they are complex. Furthermore, each solution has to be made for a specific combination of operating system and webbrowser, since often e.g. a page rendered by Microsoft Internet explorer running on a Microsoft Windows operating system will be outputted differently at the GUI than when rendered by Netscape running on Mac OS X.

US-B1-6 456 305 discloses a method and system for automatically sizing and positioning a graphical display of HTML objects to fit the dimensions and video display resolution of a display window in a program such as a browser. A first facility translates slides in a slide show presentation program into a corresponding series of scalable Slide HTML pages. A scalable Slide HTML page has a SlideObj container that contains all of the objects in that page. Divisions in the scalable Slide HTML pages are created with nested DIV tags so that percentages related to default dimensions in the SlideObj container may be used to define the dimensions of a display space for a scalable Slide HTML page. A scalar is calculated to retain the original aspect ratio when fitting a display space and HTML objects included in the scalable Slide HTML page to different display window dimensions and video display resolutions. This scalar is also used to calculate the font size of the text objects and the hyperlink area for the hyperlinks (imagemaps). User interface controls are provided to select options for automatically fitting the HTML objects in the scalable Slide HTML page to the size of the display window.

US 2002/112082 discloses a system and method for delivering a document by a first computer to a second computer over a computer network. A method of the present invention includes the following steps: decomposing the document into nodes in accordance with a document model of the document; associating the nodes with a virtual layout space having one or more regions; and scheduling delivery of the nodes. Preferably, each of the nodes is associated with at least one region, and each of the nodes further includes one or more levels of resolution. In other embodiments, the method may include one or more additional steps such as, for example, grouping the nodes in multiple batches each of which has at least one node.

WO 01/57718 A discloses a system and process for displaying and redisplaying an HTML document that conforms to the limitations of a viewer's browser. The system comprises a browser, a script, and a document object model (DOM). The script comprises a data structure and an interpretation code. The DOM is a document model representing a Web page's elements, such as text, images, URL links, etc. The process includes using the script to create a document data structure that describes the essential information in the document and using the interpretation code to interpret the data structure in a fashion that allows it to manipulate the DOM for the purpose of rendering the document in the browser. The data structure can be modified and the corresponding HTML can be subsequently regenerated in response to user events so that after initially being created, the document can be updated to reflect changes to the viewer's browser. If the viewer resizes the browser, the page elements can be automatically resized.

WO 00/25239 A discloses a method of dynamically controlling and displaying an Internet browser interface, and a dynamically controllable internet browser interface. A browser interface may be customized using a controlling software program that may be provided by an Internet content provider, an ISP, or that may reside on an Internet user's computer. The controlling software program enables the Internet user, the content provider, or the ISP to customize and control the information and/or functionality of a user's browser and browser interface by downloading or creating a library file on the Internet user's computer that includes an interface object. The interface object can display various options available on a toolbar, including a text input field that allows the user to perform a search.

It is a goal of the invention to provide a less complex solution for improving the accessibility of web-browser windows.

This object is solved according to the invention by the features of the independent claims. Embodiments of the invention are subject of the dependent claims.

Because the web-browser program includes window size program-code portions and window size setting program-code portions, the selected size of the web-browser window is known to the web-browser program. Based on the thus known size of the web-browser window, the web-browser program can render appropriate web-information areas in the web-browser window. For example, for these web-information areas the use of scroll-bars can be prevented. This is an advantage over known web-browser programs which only allow users to re-size the web-browser window at any time to an arbitrary, i.e. not easily retrievable, size.

Specific embodiments of the invention are set forth in the dependent claims.

Further details, aspects and embodiments of the invention will be described, by way of example, with reference to the attached drawing.
Fig. 1 schematically shows an example of a computer system used in connection with the invention.
Fig. 2 schematically shows a GUI suitable for the example of fig. 1.
Fig. 3 schematically shows a graphical control of the browser window of fig. 2 in more detail.
Fig. 4 schematically shows an example of a computer system connected to a web-server on which different sets of HTML-files for web-pages are stored.

The shown example of a computer system 1 comprises a user interface (UI). The UI has an output interface with a graphical user interface (GUI) 2, which in this example includes a monitor, and an input interface, which includes a keyboard 10. At the input interface, a user of the computer system 1 can input data into the computer system 1, e.g. by pressing keys on the keyboard 10. At the output interface data can be outputted in a form which can be perceived by the user, e.g. in this example visually. The system 1 further has a processor 3 communicatively connected to the GUI 2 and to the input interface 10. The processor 3 is arranged to perform instructions in accordance with a web-browser program and for outputting at the graphical user interface 2 a web-browser window 4 representating information of the web-browser program.

The web-browser program comprises window size program-code portions in which at least one predetermined web-browser window size is stored. The stored sizes are smaller than a maximum size and larger than a minimum size. The web-browser program further comprises window size setting program-code portions. The window size setting program-code portions are constructed to set a size of the web-browser window to a selected window size being stored by means of the size-storing program-code portions. Said maximum size can for example be the size of the maximum state provided by the operating system. The maximum size may also be the size in which the web-browser window 4 occupies the entire available GUI space 20. Said minimum size can for example be the threshold size provided in the intermediate state by an operating system.

It is remarked that a certain window size is smaller than said maximum window size in either of the following cases. The first "smaller than maximum" case occurs when the width of said certain window is smaller than the width of said outputtable maximum window, while the height of said certain window does not exceed the height of said maximum window. The second "smaller than maximum" case occurs when the height of said certain window is smaller than the height of said maximum window, while the width of said certain window does not exceed the width of said maximum window. Analogously, a certain window size is considered to be larger than said minimum window size in either of the following two cases. The first "larger than minimum" case occurs when the width of said certain window is larger than the width of said minimum window, while the height of said certain window is larger than or equal to the height of said minimum window. The second "larger than minimum" case occurs when the height of said certain window is larger than the height of said minimum window, while the width of said certain window is larger than or equal to the width of said minimum window.

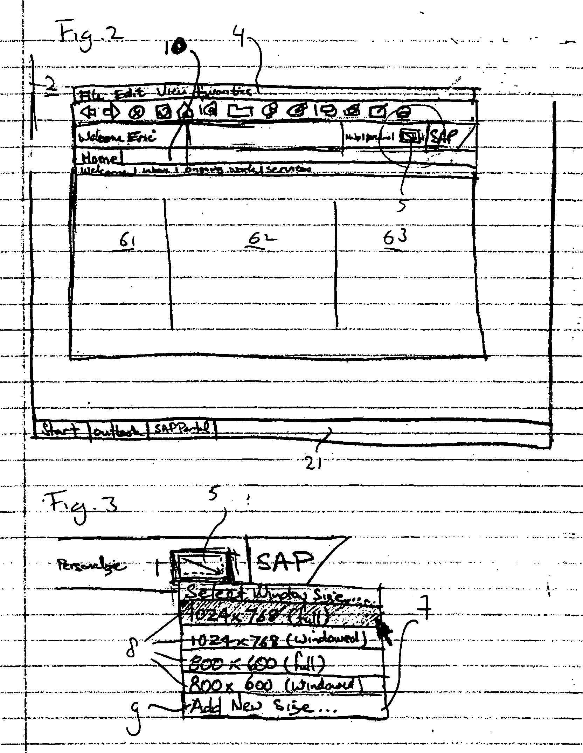

The web-browser window 4 further has a web-information area 6 in which information from a website can be displayed, e.g. a hypertext document such as a hypertext metalanguage (HTML) formatted document. In the example of Fig. 2, the web-browser window 4 is shown with three web-information areas 61, 62 and 63 displayed in it.

The web-browser window 4 further comprises a first graphical control 5, 7, 8 for outputting a representation of at least one size stored by means of the window size program-code portions for subsequently selecting by a user a stored size therefrom for subsequently setting by means of the window size setting program-code portions the web-browser window size in accordance with a selected web-browser window size selected from the at least one predetermined web-browser window size.

The number of the at least one predetermined web-browser window sizes can be smaller than the number of all possible outputtable web-browser window sizes that are smaller than said maximum size and larger than said minimum size. For example, known operating systems allow the size, i..e. width by height, of a program window to be any number of pixels between zero and the dimensions of the GUI, typically 800 by 600 pixels, 1024 by 768 pixels or 1600 by 1200 pixels. The number of the at least one predetermined web-browser window sizes can for example be ten or less, such as five or less.

In the example shown in Fig. 3, for instance, the number of selectable stored sizes is four. In the shown example, a user can select such stored size by selecting one of a number of options 8 displayed in a pull-down menu 7 belonging to the graphical control 5. The different size options to choose from may be for example number-of-pixel-combinations, such as 800 by 600 pixels, 1024 by 768 pixels, 1600 by 1200 pixels, etc. Such number-of-pixel-combinations can be chosen specifically according to the window sizes that users in practice tend to use. It is found that users tend to prefer a limited number of sizes, typically less than five. For example, such number-of-pixel-combinations can be chosen based on common sizes of personal computer screens, taking into account the space taken up by user interface elements such as operating system bars and menus and tools of the web-browser program. This offers the advantage that designers of web-pages can tune the sizes of the contents of such pages to the selectabe sizes.

The web-browser window 4 furthermore comprises a second graphical control 9 for inputting by a user to the computer system 1 at least one user-defined web-browser window size. The web-browser program includes size-storing code portions for storing the user-defined size in the window size program-code portions of the web-browser program. This offers the advantage for the user that the web-browser program is able to easily retrieve the user's custom web-browser window sizes.

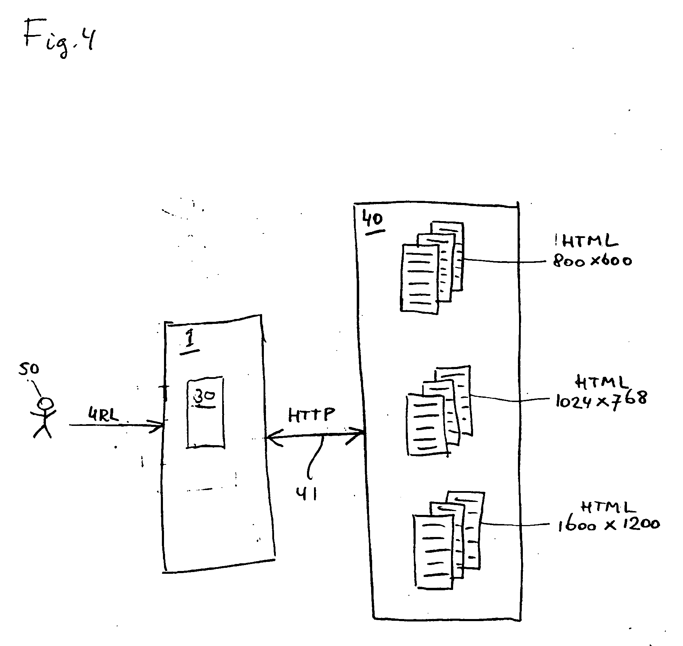

Reference is now made to Fig. 4 showing, by way of example, a web-browser program 30 running on a computer system 1. The computer system 1 is connected to a web-server 40 by means of an Internet connection 41. On the web-server 40 different sets of HTML-files for web-pages are stored. By means of a first set, designated by "HTML 800 x 600", web-pages of a web-site are programmed, wherein each page is programmed for display by means of 800 x 600 pixels. By means of a second set, designated by "HTML 1024 x 768", the same web-pages of the same web-site are programmed, however, wherein each page is programmed for display by means of 1024 x 768 pixels. Similarly, a third set "HTML 1600 x 1200" relates to the web-pages to be displayed by means of 1600 x 1200 pixels.

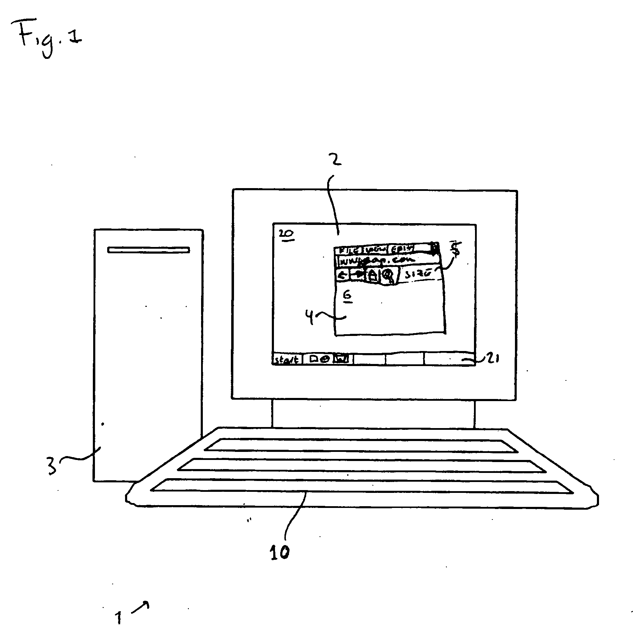

It is assumed now that the computer system 1 is in a state in which the web-browser window 4 is outputted at the GUI in a user-selected size stored in the window size program-code portions of the web-browser program 30. When, in this state, a user 50 wants to view information in one of said web-pages, the user 50 provides the web-page's URL address to instruct the web-browser program 30 to access the web-page, for example by providing the URL at a URL input 10 (shown in fig. 1). If necessary, the web-browser program 30 then retrieves the values of the user-selected size of the web-browser window 4 from the window size program-code portions. Based on the user-selected size and the URL, the web-browser program is able to locate a suitable web-page on the web-server 40. For example, the URL provided by the user 50 can point to a web-page which contains an index of available sets of web-pages, their URL and the window-sizes corresponding to each set. The web-browser program can retrieve this index and retrieve a set based on the information in the index and the size of the browser window. In case the sizes corresponding to the sets do not correspond to the selected window size, the web-browser program can determine which set of web-pages best suits the user-selected size of the web-browser window 4, for example in that the use of scroll-bars would be prevented as much as possible. In the shown example, a choice can be made from the three different sets of HTML-files, i.e. the sets HTML 800 x 600, HTML 1024 x 768 or HTML 1600 x 1200. Based on a thus located web-page, the web-browser program 30 makes an HTTP request to the web-server 40 to view the located web-page, whereafter the web-server 40 provides an HTTP response to the web-browser program 30 to permit the located web-page to be displayed. Then, the web-browser program 30 is able to instruct the processor 3 to output the located web-page at the GUI 2 in the information areas of the web-browser window 4.

Next an example is considered in which, in a state in which the web-page is thus outputted, the user 50 selects via a graphical control, for example such as shown in Fig. 3, another size stored in the window size program-code portions of the web-browser program 30. In such case the web-browser program 30 can retrieve the new user-selected size of the web-browser window 4 and can output the web-browser window with the new size. Furthermore, based on the new size and the URL, the web-browser program 30 is able to determine if a different web-page would be available on the web-server 40, which would better suit the new user-selected size of the web-browser window 4. If so, such a better suiting web-page can be located and, via the explained HTTP request/response, displayed.

It should be noted that the above-mentioned embodiments illustrate rather than limit the invention, and that those skilled in the art will be able to design alternatives without departing from the scope of the appended claims. For example, the system 1 can be arranged to output web-browser windows with web-pages displayed therein, of which programmed web-page files are stored on the system 1 itself or which are part of an intranet. In the claims, any reference signs placed between parentheses shall not be construed as limiting the claim. The word 'comprising' does not exclude the presence of other elements or steps than those listed in a claim. The mere fact that certain measures are recited in mutually different claims does not indicate that a combination of these measures cannot be used to advantage.

## Claims

1. A method for web-browsing by means of a graphical user interface (2) and a processor (3) communicatively connected thereto, the processor being arranged for performing instructions in accordance with a web-browser program (30) and for outputting at the graphical user interface (2) the web-browser program window (4), the method comprising:
- selecting a selectable window size in pixels from at least one predetermined web-browser window size stored in a window size program-code portion of the web-browser program, wherein the number of the selectable stored web-browser window sizes is five or less;
- setting by a window size setting program-code portion of the web-browser program (30), the web-browser window size in accordance with the selected web-browser window size,
- storing the user-defined web-browser window size in the window size program-code portions, and
- outputting the web-browser program window (4) at the graphical user interface (2) in a user-selected size,
- providing, by a user, an URL address to instruct the web-browser program (30) to access a web page,
- retrieving values of the user-selected size of the web-browser window (4) from the window size program-code portion, and based on the user-selected size and the URL,locating a suitable web-page on a web server (40) and displaying the located web-page,
- outputting the located web-page at the graphical user interface (2);
- selecting, by a user, another web-browser window size stored in the window size program-code portion,
- retrieving the newly user-selected size of the web-browser window (4) from the window size program-code portion;
- outputting the web-browser window (4) with the newly user-selected size;
- based on the new size and the URL, determining if a different web-page is available on the web-server (40), which better suits the newly user-selected size of the web-browser program window (4), and if so,
- locating and displaying the better suiting web-page.

2. A method according to claim 1, further comprising selecting by the web-browser program (30) of a programmed web-page to be displayed in a web-browser window (4), wherein the selecting is performed based on the retrieved user-selected size.

3. A method according to any one of the preceding claims, wherein the number of the at least one predetermined web-browser window size is smaller than the number of possible outputtable web-browser window sizes.

4. A method according to any one of the preceding claims, wherein the at least one predetermined web-browser window size comprises a size having a width by height corresponding to 800 by 600 pixels, and/or 1024 by 768 pixels and/or 1200 by 1600.

5. A method according to any one of the preceding claims, wherein the graphical user interface includes in an operational state of the system a graphical representation of one or more of the predetermined web-browser window sizes.

6. A method according to any one of the preceding claims, wherein the web-browser program further includes browsing program-code portions for retrieving a web-page depending on the selected web-browser window size.

7. A computer program product, comprising program code portions for performing steps of a method as claimed in any one of the preceding claims when run on a computer system (1).

8. An article of manufacture with a computer usable medium having computer readable instructions embodied therein for providing access to resources available on that computer system (1), the computer readable instructions comprising instructions to cause the computer system (1) to perform the steps of a method as claimed in any one of the preceding claims 1 to 6.

## Patentansprüche

1. Verfahren zum Web-Browsen bzw. Surfen bzw. Navigieren im Internet mittels einer graphischen Benutzerschnittstelle bzw. -oberfläche (2) und eines Prozessors (3), der kommunikativ damit gekoppelt ist, wobei der Prozessor angeordnet ist, um Instruktionen gemäß einem Web-Browser-Programm (30) auszuführen und an der graphischen Benutzerschnittstelle bzw. -oberfläche (2) das Web-Browser-Programmfenster (4) auszugeben, wobei das Verfahren umfasst:
- Auswählen einer auswählbaren Fenstergröße in Pixeln aus zumindest einer vorbestimmten Web-Browser-Fenstergröße, die in einem Festerngrößenprogrammcodeabschnitt des Web-Browser-Programms gespeichert ist, wobei die Anzahl der auswählbaren gespeicherten Web-Browser-Fenstergrößen fünf oder weniger beträgt;
- Festlegen, durch einen Fenstergrößenfestlegungsprogrammcodeabschnitt des Web-Browser-Programms (30), der Web-Browser-Fenstergröße gemäß der ausgewählten Web-Browser-Fenstergröße,
- Speichern der benutzerdefinierten Web-Browser-Fenstergröße in den Festerngrößenprogrammcodeabschnitten, und
- Ausgeben des Web-Browser-Programmfensters (4) an der graphischen Benutzerschnittstelle bzw. -oberfläche (2) in einer durch den Benutzer gewählten Größe,
- Bereitstellen, durch einen Benutzer, einer URL-Adresse, um das Web-Browser-Programm (30) zu instruieren, auf eine Web- bzw. Internetseite zuzugreifen,
- Abrufen bzw. Wiederauffinden von Werten der durch den Benutzer gewählten Größe des Web-Browser-Fensters (4) aus dem Festerngrößenprogrammcodeabschnitt, und basierend auf der durch den Benutzer gewählten Größe und der URL, Lokalisieren einer geeigneten Web- bzw. Internetseite auf einem Web-Server (40) und Anzeigen der lokalisierten Web- bzw. Internetseite,
- Ausgeben der lokalisierten Web- bzw. Internetseite an der graphischen Benutzerschnittstelle bzw. -oberfläche (2);
- Auswählen, durch einen Benutzer, einer anderen bzw. weiteren Web-Browser-Fenstergröße, die in dem Festerngrößenprogrammcodeabschnitt gespeichert ist,
- Abrufen bzw. Wiederauffinden der neu durch den Benutzer gewählten Größe des Web-Browser-Fensters (4) aus dem Festerngrößenprogrammcodeabschnitt;
- Ausgeben des Web-Browser-Fensters (4) mit der neu durch den Benutzer gewählten Größe;
- Basierend auf der neuen Größe und der URL, Bestimmen, ob eine unterschiedliche Web- bzw. Internetseite auf dem Web-Server (40) zu Verfügung steht, die besser zu der neu durch den Benutzer gewählten Größe des Web-Browser-Programmfensters (4) passt, und falls ja,
- Lokalisieren und Anzeigen der passenderen Web- bzw. Internetseite.

2. Verfahren nach Anspruch 1, ferner umfassend das Auswählen, durch das Web-Browser-Programm (30), einer programmierten Webseite, die in einem Web-Browser-Fenster (4) anzuzeigen ist, wobei das Auswählen basierend auf der abgerufenen, durch den Benutzer gewählten Größe durchgeführt wird.

3. Verfahren nach einem der vorhergehenden Ansprüche, wobei die Anzahl der zumindest einen vorbestimmten Web-Browser-Fenstergröße kleiner ist als die Anzahl möglicher ausgebbarer Web-Browser-Fenstergrößen.

4. Verfahren nach einem der vorhergehenden Ansprüche, wobei die zumindest eine vorbestimmte Web-Browser-Fenstergröße eine Größe umfasst, die eine Höhe mal Breite entsprechend 800 x 600 Pixeln und/oder 1024 x 768 Pixeln und/oder 1200 x 1600 Pixeln aufweist.

5. Verfahren nach einem der vorhergehenden Ansprüche, wobei die graphische Benutzeroberfläche in einem Betriebszustand des Systems eine graphische Darstellung einer oder mehrerer der vorbestimmten Web-Browser-Fenstergrößen enthält.

6. Verfahren nach einem der vorhergehenden Ansprüche, wobei das Web-Browser-Programm ferner das Browsen bzw. Surfen bzw. Navigieren von Programmcodeabschnitten zum Abrufen einer Webseite in Abhängigkeit von der ausgewählten Web-Browser-Fenstergröße enthält.

7. Computerprogrammprodukt, umfassend Programmcodeabschnitte zum Durchführen Schritte eines Verfahrens nach einem der vorhergehenden Ansprüche, wenn es bzw. sie auf einem Computersystem (1) läuft bzw. laufen.

8. Herstellungsartikel bzw. hergestellter Artikel mit einem computerverwendbaren Medium, das computerlesbare Instruktionen aufweist, die darin ausgestaltet sind, und zwar zum Bereitstellen eines Zugangs zu Ressourcen, die auf dem Computersystem (1) verfügbar sind, wobei die computerlesbaren Instruktionen Instruktionen umfassen, die das Computersystem (1) veranlassen, die Schritte eines Verfahrens nach einem der vorhergehenden Ansprüche 1 bis 6 durchzuführen.

## Revendications

1. Procédé pour la navigation sur le Web au moyen d'une interface utilisateur graphique (2) et d'un processeur (3) connecté par voie communicative à celle-ci, le processeur étant agencé pour réaliser des instructions conformément à un programme de navigateur Web (30) et pour sortir au niveau de l'interface utilisateur graphique (2) la fenêtre de programme de navigateur Web (4), le procédé comprenant :
- la sélection d'une taille de fenêtre sélectionnable en pixels à partir d'au moins une taille de fenêtre de navigateur Web prédéterminée stockée dans une portion de code de programme de taille de fenêtre du programme de navigateur Web, dans lequel le nombre de tailles de fenêtre de navigateur Web stockées sélectionnables est de cinq ou moins ;
- le réglage, par une portion de code de programme de réglage de taille de fenêtre du programme de navigateur Web (30), de la taille de fenêtre de navigateur Web conformément à la taille de fenêtre de navigateur Web sélectionnée,
- le stockage de la taille de fenêtre de navigateur Web définie par l'utilisateur dans les portions de code de programme de taille de fenêtre, et
- la sortie de la fenêtre de programme de navigateur Web (4) au niveau de l'interface utilisateur graphique (2) dans une taille sélectionnée par l'utilisateur,
- la fourniture, par un utilisateur, d'une adresse URL pour instruire le programme de navigateur Web (30) d'accéder à une page Web,
- la récupération de valeurs de la taille sélectionnée par l'utilisateur de la fenêtre de navigateur Web (4) depuis la portion de code de programme de taille de fenêtre, et en fonction de la taille sélectionnée par l'utilisateur et de l'URL, la localisation d'une page Web appropriée sur un serveur Web (40) et l'affichage de la page Web localisée,
- la sortie de la page Web localisée au niveau de l'interface utilisateur graphique (2) ;
- la sélection par un utilisateur d'une autre taille de fenêtre de navigateur Web stockée dans la portion de code de programme de taille de fenêtre,
- la récupération de la taille nouvellement sélectionnée par l'utilisateur de la fenêtre de navigateur Web (4) depuis la portion de code de programme de taille de fenêtre ;
- la sortie de la fenêtre de navigateur Web (4) avec la taille nouvellement sélectionnée par l'utilisateur ;
- en fonction de la nouvelle taille et de l'URL, le fait de déterminer si une page Web différente est disponible sur le serveur Web (40) qui convient mieux à la taille nouvellement sélectionnée par l'utilisateur de la fenêtre de programme de navigateur Web (4), et si c'est le cas,
- la localisation et l'affichage de la page Web convenant mieux.

2. Procédé selon la revendication 1, comprenant en outre la sélection par le programme de navigateur Web (30) d'une page Web programmée pour être affichée dans une fenêtre de navigateur Web (4), dans lequel la sélection est réalisée en fonction de la taille sélectionnée par l'utilisateur récupérée.

3. Procédé selon l'une quelconque des revendications précédentes, dans lequel le nombre de l'au moins une taille de fenêtre de navigateur Web prédéterminée est inférieur au nombre de tailles de fenêtre de navigateur Web pouvant être sorties possibles.

4. Procédé selon l'une quelconque des revendications précédentes, dans lequel l'au moins une taille de fenêtre de navigateur Web prédéterminée comprend une taille ayant une largeur par une hauteur correspondant à 800 par 600 pixels et/ou 1024 par 768 pixels et/ou 1200 par 1600.

5. Procédé selon l'une quelconque des revendications précédentes, dans lequel l'interface utilisateur graphique inclut dans un état opérationnel du système une représentation graphique d'une ou plusieurs des tailles de fenêtre de navigateur Web prédéterminées.

6. Procédé selon l'une quelconque des revendications précédentes, dans lequel le programme de navigateur Web inclut en outre des portions de code de programme de navigation pour récupérer une page Web en fonction de la taille de fenêtre de navigateur Web sélectionnée.

7. Produit de programme informatique comprenant des portions de code de programme pour réaliser des étapes d'un procédé selon l'une quelconque des revendications précédentes lors de l'exécution sur un système informatique (1).

8. Article de fabrication avec un support utilisable par ordinateur ayant des instructions lisibles par ordinateur incorporées dans celui-ci pour fournir un accès à des ressources disponibles sur ce système informatique (1), les instructions lisibles par ordinateur comprenant des instructions pour pousser le système informatique (1) à réaliser les étapes d'un procédé selon l'une quelconque des revendications précédentes 1 à 6.
